# EUROPEAN PATENT SPECIFICATION

(11) **EP 2 514 537 B1**
(45) Date of publication and mention of the grant of the patent: **08.08.2018**
(21) Application number: 11182019.7
(22) Date of filing: 20.09.2011
(51) Int. Cl.: B21J 15/02, B21J 15/08

(54) **Method of riveting aluminium alloy sheet**
Verfahren zum Stanznieten von Aluminiumlegierungsblech
Procédé de rivetage de tôles en alliage d'aluminium

(43) Date of publication of application: 24.10.2012
(73) Proprietor: Aleris Aluminum Duffel BVBA, 2570 Duffel (BE)
(72) Inventor: Smeyers, Axel Alexander Maria, 2220 Heist op den Berg (BE)
(74) Representative: Müller Schupfner & Partner Patent- und Rechtsanwaltspartnerschaft mbB

(56) References cited:
- EP-A1- 2 128 004
- EP-A2- 1 440 747
- DE-A1-102009 055 010
- DE-C- 914 922
- JP-A- H06 278 645
- JP-A- 2007 039 003
- US-A1- 2003 167 621

## Description

### FIELD OF THE INVENTION

The invention relates to a method for joining components together and more particularly to joining metal sheet material using rivets (see e.g. DE 10 2009 055 010 A1).

### BACKGROUND TO THE INVENTION

As will be appreciated herein below, except as otherwise indicated, aluminium alloy designations and temper designations refer to the Aluminium Association designations in Aluminium Standards and Data and the Registration Records, as published by the Aluminium Association in 2011 and are well known to the person skilled in the art.

For any description of alloy compositions or preferred alloy compositions, all references to percentages are by weight percent unless otherwise indicated.

Self-piercing riveting ("SPR") is a well-established technique for joining together components such as, for example, sheet metal. A self-piercing rivet typically comprises a head and a partially hollow cylindrical shank that terminates in an annular piercing edge and is inserted into one or more sheet of material. The rivet is driven by a punch of a setting tool into the sheets such that the shank pierces through the upper sheet (or sheets) and flares outwardly whilst supported by a die. It is inserted without full penetration such that the deformed end of the rivet remains encapsulated by an upset annulus of the material thus forming a mechanical interlock. Self-piercing riveting enables sheet material to be joined without the requirement for the pre-drilling or pre-punching of a hole in the material.

Self-piercing riveting technology has application in many manufacturing industries but has been particularly successful in the automotive industry where there is a drive to use material of lighter weight without reducing safety. SPR has been used to join components such as aluminium vehicle body panels, which cannot be spot-welded easily. SPR techniques have proved successful in this context not only because they produce joints of good strength and fatigue properties that can be easily automated on a production line but also because the joints are aesthetically acceptable in that there is little distortion of the upper surface of the sheet material around the rivet.

SPR is faced with increasing challenges in terms of the types of joints that manufacturers would like to produce using the technology, in particular when using high-strength aluminium series alloys such as those of the AA7000-series alloys.

### DESCRIPTION OF THE INVENTION

It is an object of the invention to provide an improved method of joining that can be applied to high-strength aluminium alloy sheet material.

This and other objects and further advantages are met or exceeded by the present invention providing a method for producing a joint according to claim 1. The heat-treatment of the 7000-series sheet material to reduce the tensile strength in at least the joining area can be carried out prior to the riveting operation by heat-treating the whole of the 7000-series sheet material or by at least heat-treating the specific areas to be joined (e.g. a flange area). The heat-treatment can be carried out also by carrying out a local heat-treatment in the joining area at the beginning of the joining operation, and can be carried out as part of the joining operation itself.

The heat-treatment is carried such that the 7000-series sheet material at least in the joining area is subjected to a temperature in a range of about 100°C to about 350°C. A preferred lower-limit is about 140°C. A preferred upper-limit for the temperature is about 250°C, and more preferably about 200°C.

The heat-treatment at the defined temperature range is for not longer than about 60 seconds, and preferably for not longer than about 30 seconds, and more preferably for not longer than about 20 seconds, for example about 5 sec. or about 10 sec.

In accordance with the invention it has been found that the method enables the production of a riveted joint incorporating at least one workpiece made of a 7000-series material and providing a crack free SPR joint with a reproducible depth independent of the natural aging time of the 7000-series material before the joining operation. Furthermore, the forces required to make such a SPR joint are significantly reduced.

When producing on an industrial scale, e.g. at an OEM, joint components incorporating at least one member or workpiece of a 7000-series material in a W-Temper (solution heat-treated, quenched), due to logistical constrains it is hardly feasible to ensure that these members or workpieces are joined within a limited or predefined narrow time frame. As a direct consequence, different members or workpieces of a 7000-series material can have been subjected to a different duration of natural aging and consequently will have different levels of strength and ductility. For several 7000-series aluminium alloys having been natural aged for more than 2 to 3 weeks, the ductility is reduced significantly rendering is very difficult to produce SPR joints without cracks in the sheet material. Furthermore, due to the difficulty of tracking the "age" of individual 7000-series parts to be joint and it may happen that two members or workpieces with different levels or different history of natural aging have to be joined, thereby it is practically impossible to know in advance which force to apply during joining to achieve a SPR joint with the desired and reproducible penetrating depth.

It has been found that a heat-treatment within the defined range, and with preferred narrower ranges, reduces the yield strength of the AA7000-series alloy material and correspondingly increases the ductility. This reduction is substantially independent of the amount of natural aging it had received prior to the heat-treatment in accordance with the invention, and bringing it again to a desirable similar and relatively low level as it had at the time immediately up to 60 minutes after having been solution heat treated and quenched.

As a resultant it allows the AA7000-series material to be joined without the formation of cracks during riveting. Furthermore, it allows a consistent and reproducible riveting practice with regard to joint quality (e.g. depth) and joining set-up (e.g. force).

This heat-treatment in accordance with the invention does not only allow to production of crack-free SPR joints, but in addition may improve in general terms the ductility or formability of the heat-treated areas of the AA7000-series material resulting in improved hemming behaviour or other mechanical joining techniques. Furthermore, by reducing the yield strength of the AA7000-series material in the joining area results in lower levels of residual stress in the material by the joining operation and thereby at least reducing or even preventing the occurrence of delayed fracture.

In addition, it has been found also that the method in accordance to this invention does not adversely affect the final strength properties of the AA7000-series material after being subject to an artificial ageing treatment, such as a paint-bake cycle, in comparison to the same AA7000-series material in the T4 condition and subjected to the same artificial ageing treatment.

For some embodiments it has been found that for the joint made in accordance with the invention the tear strength and in particular the peel strength is increased compared to T4 sheet material. The punch applies a compressive force during rivet insertion to deform the workpieces into a joint at a joining area between the tool and the die.

The at least two overlapping workpieces comprise a first workpiece that is closest to the punch and a second workpiece that is closest to the die. There may be one or more intermediate workpieces between the first workpiece and the second workpiece. The rivet may be inserted such that the rivet does not penetrate the workpiece that is closest to the die. The rivet may pierce through at least a first workpiece that is closest to the punch and may also pierce thorough one or more intermediate workpieces. The rivet is inserted into the workpieces without full penetration (i.e. it does not pierce through the second workpiece) such that a deformed end of the rivet remains encapsulated by an upset annulus of the material.

The rivet may have a head and a shank, which may be hollow or partially hollow. Alternatively it may take the form of a solid slug with or without a head.

The heat-treatment of at least the workpiece made of an aluminium alloy of the AA7000-series in the joining area can be carried out using various heating means known to the skilled person, and include amongst others, induction heating, contact heating, and infra-red heating.

In the method according to this invention at least one of the workpieces must be from an AA7xxx-series aluminium alloy sheet material.

In an embodiment of the invention one workpiece is made from an AA7000-series aluminium alloy sheet material and the other workpiece is made also from an aluminium alloy sheet material. The other workpiece is preferably be made from an aluminium alloy selected from the group of AA5000, AA6000, and AA7000-series aluminium alloys.

In another embodiment of the invention one workpiece is made from an AA7xxx-series aluminium alloy sheet material and the other workpiece is made from a steel sheet or a steel sheet having provided on one or both sides with an aluminium alloy.

The method according to this invention can be applied to a wide range of AA7000-series alloys, both for the first component as well as for the second component. In a preferred embodiment the aluminium alloy is selected from the group of AA7021, AA7136, AA7050, AA7055, AA7075, AA7081, AA7181, AA7085, AA7185, and modifications thereof.

In another preferred embodiment, the AA7000-series alloy comprises, in wt.%,

| | |
|---|---|
| Zn | 5.0 to 8.2, preferably about 6 to 7.7 or alternatively 5.0 to 6.0, |
| Mg | 1.5 to 2.1 |
| Cu | 0 to 0.45, preferably 0 to 0.3, |
| Mn | 0 to 0.15, preferably 0 to 0.05, |
| Zr | 0.04 to 0.25% |
| Ti | 0 to 0.15 |
| Fe | 0 to 0.35 |
| Si | 0 to 0.25, |

other elements and unavoidable impurities, each maximum 0.05%, total
0.20%, balance aluminium.

Preferably the AA7000 series aluminium alloy sheet component has a gauge in a range of about 0.5 mm to 4 mm, and preferably of about 0.7 to 3.5 mm.

In an embodiment the AA7000-series aluminium alloy sheet component has been provided with a metal clad layer applied on at least one side, wherein the metal clad layer material has an inner-surface and an outer-surface and wherein the inner-surface is facing the AA7000-series material.

The clad layer or clad layers are usually much thinner than the core sheet, and each clad layer constituting about 1 % to 25% of the total composite sheet thickness. A clad layer more typically constitutes around about 1% to 14% of the total composite sheet thickness.

The clad layer material can be made from an AA3000, AA4000-, AA5000-, AA6000-, or a different AA7000-series aluminium alloy compared to the core alloy. Typical examples of such clad layers are those having a chemical composition within the ranges of AA3004, AA3005, AA6016, AA6016A, AA6005, AA6005A, AA5005, AA5005A, AA5754, AA5051A, AA5052, AA5252, AA5352, and AA5018.

After riveting the joined structure can be subjected to an artificial heat-treatment, such heat-treatment could eliminated or at least reduce for example susceptibility to delayed fracture. Such a heat-treatment would be carried out at a temperature in the range of 50°C to 250°C. Such a heat-treatment could be carried out as a one-step ageing treatment or as a multi-step ageing treatment, for example a 2-step or a 3-step ageing treatment. A preferred upper-limit for the heat-treatment is about 210°C and more preferably about 140°C. A too high temperature may give raise to an adverse effect on the strength levels after the paint bake cycle. A preferred lower-limit for the heat-treatment is about 70°C and more preferably about 100°C.

The heat-treatment in the defined temperature range is preferably carried out such that the joined structure is at the pre-ageing temperature for not longer than 5 hours to avoid a reduction in productivity, and more preferably not longer than about 1 hour. The minimum time is about 1 minute. Typically the heat-treatment is carried out at said temperature for several minutes, e.g. 2 to 30 minutes, such as about 4 or 8 minutes.

Alternatively such an artificial heat-treatment may also coincide with the paint-bake cycle. Following the joining operation by means of riveting, the joined components are typically made part of an assembly of other metal components as is regular in the art for manufacturing vehicle components, and subjected to a paint bake operation to cure any paint or lacquer layer applied. During the paint bake cycle the AA7000-series alloy used in the joined components achieves its desired final strength levels. The paint bake operation or paint bake cycle typically comprises one or more sequential short heat treatment in the range of 120°C to 200°C for a period of 10 to less than 40 minutes, and typically of less than 30 minutes. A typical paint bake cycle would comprise a first heat treatment of about 180°C at 20 minutes, cooling to ambient temperature, then about 160°C at 20 minutes and cooling to ambient temperature. In dependence of the OEM such a paint bake cycle may comprise of 2 to even up to 5 sequential steps and includes drying steps, but either way the cumulated time at elevated temperature (100°C to 200°C) of the aluminium alloy product is less than 120 minutes.

In a further aspect of the invention the method is used to manufacture an automotive structural part or member, and preferably a structural part selected from the group of: a door beam, roof beam, side beam, instrumental panel support beam, pillar reinforcement, tunnel, B-pillar reinforcement, body-in-white part.

In a further aspect of the invention it relates to the use of a metal workpiece made from an AA7000-series aluminium sheet material, and having a preferred alloy composition as herein described, having been heat-treated at least in a joining area for up to 60 seconds at 100°C to 350°C prior to the production of a joint and/or for at least part of the time during production of a joint by joining it to another metal workpiece using a rivet, in particular using a self-piercing rivet.

The following example is provided to further illustrate the objectives and advantages of this invention. It is not intended to limit the scope of this invention in any manner, however.

### EXAMPLE

Two sheets each of 2 mm gauge and made of an AA7021-series aluminium alloys have been joint via SPR joints using two commercially available riveting techniques.

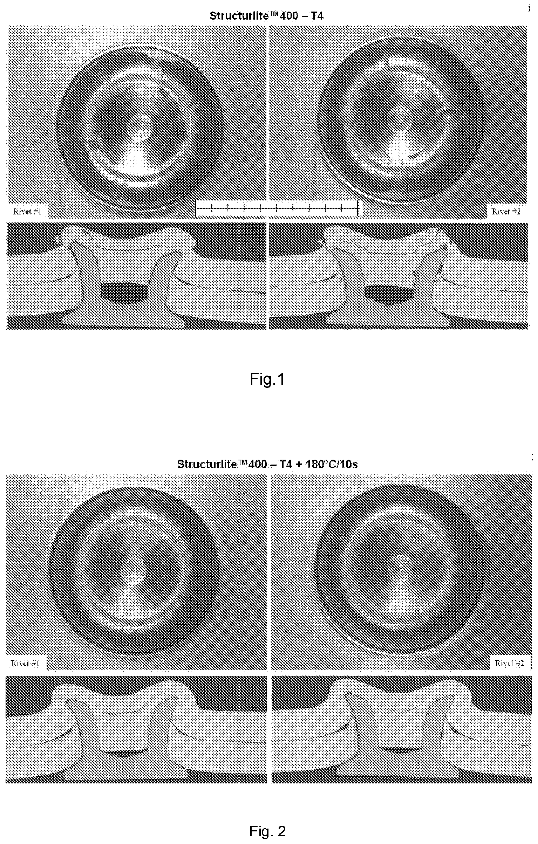

In the first trial both sheets were in a T4 condition (solution heat-treated, quenched, and natural aged for over 6 months), and macro pictures of the resultant joint are shown in Fig. 1. From the pictures of Fig. 1 it is clear that there is undesirable formation of cracks in the sheet material.

In a second trial the same sheets in the T4 condition have been heat-treated also for 10 sec. at 180°C and within about 5 minutes joined using the two SPR techniques. From the pictures of Fig. 2 the benefit of the heat-treatment is clear and no formation of cracks in the sheet material are being found, and whereby a sound and reproducible SPR joint is being formed.

In this experimental set up the whole sheets have been heat-treated, but it will be immediately apparent to the skilled person that the same effect will be obtained when the heat-treatment is carried out locally in the joining area.

The SPR joints obtained via one of the commercial joining techniques have been tested also for the peel strength and the tear strength after artificial ageing using a heat-treatment representing a typical paint-bake cycle. These tests have been carried out 1 day and 4 days after the artificial ageing heat-treatment to investigate any possible influence of natural ageing. The test results are listed in Table 1 below and all test results given are an average of three tests carried out.

**Table 1. The peel strength (in [N]) and shear strength (Fmax in [N]) of the SPR joint after 1 day and 4 days of joining.**

| **Sheet condition** | **Peel strength [N]** | | **Shear strength [N]** | |
|---|---|---|---|---|
| | **1 day** | **4 days** | **1 day** | **4 days** |
| **T4** | 1774 | 2007 | 9084 | 8660 |
| **10 sec@180°C** | 2779 | 2800 | 10082 | 10062 |

From the results in Table 1 it can be seen that RVS joints obtained by the method according to this invention results in significant higher peel strength and shear strength compared to the same material having been treated otherwise in the same manner. Furthermore, it can be seen that the properties of the SPR joint after artificial ageing are stable.

While various embodiments of the technology described herein have been described in detail, it is apparent that modifications and adaptations of those embodiments will occur to those skilled in the art. However, it is to be expressly understood that such modifications and adaptations are within the scope of the appended claims.

## Claims

1. A method for producing a joint in at least two overlapping metal workpieces using a joining tool, comprising a punch to insert a self-piecing rivet into the workpieces to form the joint, the workpieces having a first surface that is nearest the tool, the method comprising placing the workpieces between the tool and a die, and positioning a rivet between the punch and the first surface, using the punch to insert the rivet into the at least two overlapping workpieces such that the first surface is pierced by the rivet, and wherein at least one of the first workpiece and second workpiece is a sheet material made of an aluminium alloy of the AA7000-series, **characterised in that** there is applied a heat-treatment to at least the workpiece of said 7000-series sheet material involving heating said sheet material to a temperature in a range of 100°C to 350°C for a period of up to 60 seconds within 120 minutes prior to the production of the joint and/or for at least part of the time during production of the joint so as to reduce the tensile strength in the joining area of at least of the workpiece of said 7000-series sheet material.

2. A method according to claim 1, wherein the heat-treatment of said 7000-series sheet material involves heating to a temperature in a range of 100°C to 350°C for a period of up to 30 seconds.

3. A method according to any one of claims 1 to 2, wherein the heat-treatment of said 7000-series sheet material is performed within 60 minutes prior to the production of the joint.

4. A method according to any one of claims 1 to 3, wherein at least the workpiece that is nearest to the tool is a sheet material made of an aluminium alloy of the AA7000-series.

5. A method according to any one of claims 1 to 4, wherein at least the workpiece that is nearest to the die is a sheet material made of an aluminium alloy of the AA7000-series.

6. A method according to any one of claims 1 to 5, wherein the AA7000-series alloy is selected from the group comprising AA7021, AA7136, AA7075, AA7081, AA7181, AA7085, AA7185, AA7050, AA7055.

7. A method according to any one of claims 1 to 6, wherein the AA7000-series alloy has a composition of, in wt.%,
| | |
|---|---|
| Zn | 5.0 to 8.2 |
| Mg | 1.5 to 2.1 |
| Cu | 0 to 0.45 |
| Mn | 0 to 0.15 |
| Zr | 0.04 to 0.25 |
| Ti | 0 to 0.15 |
| Fe | 0 to 0.35 |
| Si | 0 to 0.25, |
other elements and unavoidable impurities, each maximum 0.05%, total
0.20%, balance aluminium.

8. A method according to any one of claims 1 to 7, wherein the at least two overlapping workpieces comprise a first workpiece that is nearest to the tool and a second workpiece that is nearest to the die, the rivet being inserted such that it does not penetrate through the second workpiece.

9. A method according to any one of claims 1 to 8, wherein the joint of the at least two overlapping metal workpieces is further artificially aged.

10. A method according to any one of claims 1 to 9, wherein the joint forms part of an automotive structural member.

## Patentansprüche

1. Verfahren zur Herstellung einer Verbindung in mindestens zwei überlappenden metallischen Werkstücken unter Verwendung eines Verbindungswerkzeugs, das einen Stempel aufweist, um eine Stanzniete in die Werkstücke einzuführen, um die Verbindung zu bilden, wobei die Werkstücke eine erste Fläche haben, die dem Werkzeug am nächsten ist, wobei das Verfahren das Anordnen der Werkstücke zwischen dem Werkzeug und einer Matrize und das Positionieren einer Niete zwischen dem Stempel und der ersten Fläche aufweist und die Verwendung des Stempels, um die Niete so in die mindestens zwei überlappenden Werkstücke einzuführen, dass die erste Fläche von der Niete durchschlagen wird, umfasst, und wobei mindestens eines vom ersten Werkstück und zweiten Werkstück ein Blechmaterial aus einer Aluminiumlegierung der AA7000-Serie ist, **dadurch gekennzeichnet, dass** eine Wärmebehandlung an mindestens dem Werkstück aus dem Blechmaterial der 7000-Serie angewendet wird, die das Erwärmen des Blechmaterials auf eine Temperatur in einem Bereich von 100°C bis 350°C für einen Zeitraum von bis zu 60 Sekunden innerhalb von 120 Minuten vor der Herstellung der Verbindung und/oder für mindestens einen Teil der Zeit während der Herstellung der Verbindung umfasst, um die Zugfestigkeit in dem Verbindungsbereich des mindestens einen Werkstückes aus dem Blechmaterial der 7000-Serie zu reduzieren.

2. Verfahren nach Anspruch 1, wobei die Wärmebehandlung des Blechmaterials der 7000-Serie eine Erwärmung auf eine Temperatur in einem Bereich von 100°C bis 350°C für einen Zeitraum von bis zu 30 Sekunden beinhaltet.

3. Verfahren nach einem der Ansprüche 1 bis 2, wobei die Wärmebehandlung des Blechmaterials der 7000-Serie innerhalb von 60 Minuten vor der Herstellung der Verbindung durchgeführt wird.

4. Verfahren nach einem der Ansprüche 1 bis 3, wobei mindestens das Werkstück, das dem Werkzeug am nächsten ist, ein Blechmaterial aus einer Aluminiumlegierung der AA7000-Serie ist.

5. Verfahren nach einem der Ansprüche 1 bis 4, wobei mindestens das Werkstück, das der Matrize am nächsten ist, ein Blechmaterial aus einer Aluminiumlegierung der AA7000-Serie ist.

6. Verfahren nach einem der Ansprüche 1 bis 5, wobei die Legierung der AA7000-Serie aus der Gruppe ausgewählt wird, die AA7021, AA7136, AA7075, AA7081, AA7181, AA7085, AA7185, AA7050, AA7055 enthält.

7. Verfahren nach einem der Ansprüche 1 bis 6, wobei die Legierung der AA7000-Serie eine Zusammensetzung in Gew.-% hat von
| | |
|---|---|
| Zn | 5,0 bis 8,2 |
| MG | 1,5 bis 2,1 |
| Cu | 0 bis 0,45 |
| Mn | 0 bis 0,15 |
| Zr | 0,04 bis 0,25 |
| Ti | 0 bis 0,15 |
| Fe | 0 bis 0,35 |
| Si | 0 bis 0,25, |
andere Elemente und unvermeidliche Verunreinigungen, je maximal 0,05%, insgesamt 0,20%, Rest Aluminium.

8. Verfahren nach einem der Ansprüche 1 bis 7, wobei die mindestens zwei überlappenden Werkstücke ein erstes Werkstück, das dem Werkzeug am nächsten ist, und ein zweites Werkstück aufweisen, das der Matrize am nächsten ist, wobei die Niete so eingeführt wird, dass sie das zweite Werkstück nicht durchdringt.

9. Verfahren nach einem der Ansprüche 1 bis 8, wobei die Verbindung der mindestens zwei überlappenden metallischen Werkstücke weiter warmausgehärtet wird.

10. Verfahren nach einem der Ansprüche 1 bis 9, wobei die Verbindung weiter Teil eines Kraftfahrzeug-Strukturelements ist.

## Revendications

1. Procédé pour produire une jonction dans au moins deux pièces à oeuvrer en métal qui se chevauchent en utilisant un outil de jonction, comprenant un poinçon afin d'insérer un rivet autoperceur dans les pièces à oeuvrer pour former la jonction, les pièces à oeuvrer ayant une première surface qui est la plus rapprochée de l'outil, le procédé comprenant les étapes consistant à placer les pièces à oeuvrer entre l'outil et une matrice, et à positionner un rivet entre le poinçon et la première surface, à utiliser le poinçon pour insérer le rivet dans lesdites au moins deux pièces à oeuvrer en chevauchement de telle façon que la première surface est percée par le rivet, et dans lequel l'une au moins de la première pièce à oeuvrer et de la seconde pièce à oeuvrer est sous forme d'une tôle de matière faite d'un alliage d'aluminium de la série AA7000,
**caractérisé en ce que** l'on applique un traitement à chaud au moins à ladite pièce à oeuvrer en tôle d'alliage d'aluminium de la série 7000, impliquant de chauffer ladite tôle à une température dans une plage de 100° C à 350° C pendant une période allant jusqu'à 60 secondes dans les 120 minutes précédant la production de la jonction et/ou pendant au moins une partie du temps pendant la production de la jonction de manière à réduire la résistance à la traction dans la zone de jonction, au moins de ladite pièce à oeuvrer en tôle d'alliage d'aluminium de la série 7000.

2. Procédé selon la revendication 1, dans lequel le traitement à chaud de ladite tôle d'alliage d'aluminium de la série 7000 implique un chauffage à une température dans une plage de 100° C à 350° C pendant une période allant jusqu'à 30 secondes.

3. Procédé selon l'une quelconque des revendications 1 et 2, dans lequel le traitement à chaud de ladite tôle d'alliage d'aluminium de la série 7000 est effectué dans les 60 minutes avant la production de la jonction.

4. Procédé selon l'une quelconque des revendications 1 à 3, dans lequel au moins la pièce à oeuvrer qui est la plus proche de l'outil est en tôle faite d'un alliage d'aluminium de la série AA7000.

5. Procédé selon l'une quelconque des revendications 1 à 4, dans lequel au moins la pièce à oeuvrer qui est la plus proche de la matrice est en tôle faite d'un alliage d'aluminium de la série AA7000.

6. Procédé selon l'une quelconque des revendications 1 à 5, dans lequel l'alliage de la série AA7000 est sélectionné parmi le groupe comprenant AA7021, AA7136, AA7075, AA7081, AA7181, AA7085, AA7185, AA7050, AA7055.

7. Procédé selon l'une quelconque des revendications 1 à 6, dans lequel l'alliage de la série AA7000 a une composition, en pourcentage en poids, de :
| | |
|---|---|
| Zn | 5,0 à 8,2 |
| Mg | 1,5 à 2,1 |
| Cu | 0 à 0,45 |
| Mn | 0 à 0,15 |
| Zr | 0,04 à 0,25 |
| Ti | 0 à 0,15 |
| Fe | 0 à 0,35 |
| Si | 0 à 0,25 |
d'autres éléments et des impuretés inévitables, chacun au maximum 0,05 %, au total 0,20 %, le reste étant de l'aluminium.

8. Procédé selon l'une quelconque des revendications 1 à 7, dans lequel lesdites au moins deux pièces à oeuvrer en chevauchement comprennent une première pièce à oeuvrer qui est la plus proche de l'outil et une seconde pièce à oeuvrer qui est la plus proche de la matrice, le rivet étant inséré de telle façon qu'il ne pénètre pas à travers la seconde pièce à oeuvrer.

9. Procédé selon l'une quelconque des revendications 1 à 8, dans lequel la jonction desdites au moins deux pièces à oeuvrer en métal qui se chevauchent est en outre soumise à un vieillissement artificiel.

10. Procédé selon l'une quelconque des revendications 1 à 9, dans lequel la jonction fait partie d'un élément structurel automobile.
